# EUROPÄISCHE PATENTSCHRIFT

(11) **EP 1 843 527 B1**
(45) Veröffentlichungstag und Bekanntmachung des Hinweises auf die Patenterteilung: **20.05.2009**
(21) Anmeldenummer: 07104749.2
(22) Anmeldetag: 23.03.2007
(51) Int. Cl.: H04L 12/403, H04L 12/56

(54) **Kommunikationsverfahren**
Communications method
Procédé de communication

(30) Priorität: 05.04.2006 DE 102006016039
(43) Veröffentlichungstag der Anmeldung: 10.10.2007
(73) Patentinhaber: ROBERT BOSCH GMBH, 70442 Stuttgart (DE)
(72) Erfinder: Zender, Arne, 31162, Bad Salzdetfurth (DE); Vollmer, Vasco, 31162, Bad Salzdetfurth (DE); Sonnenrein, Thomas, 31167, Bockenem (DE); Weber, Alexander, 31135, Hildesheim (DE)

(56) Entgegenhaltungen:
- EP-A- 0 559 214
- EP-A- 0 971 509
- DE-A1- 19 637 312

## Beschreibung

### Stand der Technik

Die vorliegende Erfindung betrifft ein Kommunikationssystem und ein Kommunikationsverfahren, in denen über einen physikalischen Kommunikationskanal mehrere logische Verbindungen realisiert werden können

Aus EP 0 971 509 A ist ein Verfahren zum Reservieren von Bandbreite in einem Netzwerk bekannt. Das beschriebene Netzwerk umfasst eine Übertragungsstrecke mit mehreren Knoten. Für jeden Knoten wird eine Liste gepflegt, aus der dessen Auslastung und freie Kapazitäten ersichtlich ist. Ein globales Resourcenmanagement prüft vor einem neuen Verbindungsaufbau, ob für alle Knoten, die an dem Verbindungsaufbau beteiligt sind, diese freie Kapazitäten aufweisen.

Aus der DE 196 37 312 A1 ist ein weiteres Verfahren zur Kontrolle von Verbindungen eines Übertragungzssystems bekannt.

EP 0 559 214 beschreibt ein Verfahren zur Ereignis-gesteuerten Verwaltung eines Kommunikationsnetzwerkes.

Moderne Fahrzeuge enthalten Kommunikationssysteme mittels derer die verschiedenen Komponenten oder Bauteile (z.B. Sensoren und Aktuatoren oder dergl.) miteinander vernetzt werden. Typischerweise enthalten solche Kommunikationssysteme ein Bus-System, mit dem mehrere logische Kommunikationsverbindungen (im Folgenden "Verbindungen" genannt) über einen physikalischen Kommunikationskanal realisiert werden können. Ein typisches Beispiel für ein solches Bus-System im Fahrzeugbereich ist das CAN-Bussystem. Die Qualität einer Verbindung (auch "Quality of Service" oder "QoS" genannt) über einen solchen Kommunikationskanal wird üblicherweise als Menge von Parametern beschrieben. Zu diesen QoS-Parametern gehören zum Beispiel Datenrate, Latenzzeit und Jitter. Verbindungen zwischen Applikationen haben unterschiedliche Charakteristika, die wiederum unterschiedliche Anforderungen an die Qualität der Verbindung bedingen. So können bestimmte Verbindungen eine minimale Datenrate oder einen maximalen Jitter erfordern. Eine Applikation (im Folgenden auch "Ressourcennutzer" genannt), die über den physikalischen Kommunikationskanal kommunizieren möchte, meldet einen entsprechenden Verbindungswunsch an das Kommunikationssystem (eventuell unter Angabe der gewünschten oder notwendigen QoS-Parameter), welches daraufhin für diese Verbindung einen logischen Kommunikationskanal zuweist.

Eine wesentliche Schwierigkeit bei der Bereitstellung von Verbindungen durch das Kommunikationssystem besteht jedoch darin, den Anforderungen aller das Kommunikationssystem nutzenden Applikationen gerecht zu werden. Insbesondere im Fahrzeugbereich sind Vorüberlegungen notwendig, um sicherzustellen, dass alle notwendigen Verbindungen zustande kommen können, mit anderen Worten also, dass die Ressource Kommunikation adäquat dimensioniert ist.

Bei Fahrzeugkommunikationssystemen werden daher herkömmlicherweise die QualitätsAnforderungen an die Verbindungen während der Entwicklungs- und Integrationsphase gesammelt und aufgrund einer Worst-Case-Betrachtung eine Auslegung des Kommunikationssystems durchgeführt, die für jede Applikation die Einhaltung der jeweils geforderten QoS-Parameter auch unter ungünstigste Umständen (worst case) sicherstellt. Als problematisch erweist sich hierbei jedoch, dass den einzelnen Applikationen bzw. den von ihnen eingegangenen Verbindungen schon im Vorhinein eine bestimmte Bandbreite bzw. Verbindungsqualität zugeordnet wird. Falls sich beispielsweise zur Laufzeit herausstellen sollte, dass eine Applikation weniger als die ihr zugewiesene Übertragungskapazität benötigt, dann kann diese "überschüssige" Übertragungskapazität nicht neu zugewiesen werden. Eine solche Auslegung führt somit zu statischen Schedules (Ablaufplänen), in denen nicht flexibel auf den momentanen Verbindungsbedarf reagiert werden kann. Mit anderen Worten werden bei Kraftfahrzeugkommunikationssystemen Verbindungen von definierter Qualität üblicherweise durch eine Überauslegung des Systems realisiert. Dabei werden Kapazitäten bereitgestellt, die unter normalen Betriebsumständen nur selten oder gar nicht genutzt werden. Diese Überkapazitäten verursachen einen erhöhten Kostenaufwand.

### Vorteile der Erfindung

Demgemäß ist ein Kommunikationsverfahren vorgesehen, das für folgendes ist ein Kommunikationssystem geeignet ist, insbesondere für ein Kraftfahrzeug,
- mit einer Übertragungsstrecke, über die mehrere logische Verbindungen realisiert werden können, wobei die Übertragungsstrecke mindestens zwei Teilstrecken mit jeweils begrenzter Übertragungskapazität umfasst,
- mit mehreren lokalen Kommunikationsverwaltungen, wobei jede der lokalen Kommunikationsverwaltungen jeweils einer der mindestens zwei Teilstrecken zugeordnet ist und jeder der auf der zugeordneten Teilstrecke realisierten logischen Verbindungen eine bestimmte Übertragungskapazität zuweist, und
- mit einer globalen Kommunikationsverwaltung, welche ausgelegt ist, die Zuweisung von Übertragungskapazitäten durch die lokalen Kommunikationsverwaltungen nach einem vorgegebenen Schema zu koordinieren.

Die Erfindung basiert auf der Erkenntnis, dass die beispielsweise durch eine Worst-Case-Betrachtung ermittelte oder im Rahmen eines Verkehrsvertrages zwischen einer Applikation und dem Kommunikationssystem ausgehandelte Qualität der Verbindung nicht permanent von der Applikation benötigt wird. Beispielsweise ist es möglich, dass die für eine bestimmte Applikation bereitgestellte Bandbreite für Datenübertragungen von der Applikation für lange Zeitintervalle nicht benutzt wird. Der der Erfindung zugrunde liegende Gedanke ist es nun, anstelle der heute üblichen statischen Zuweisung von Verbindungen definierter Qualität bei Überauslegung des Kommunikationssystems eine dynamische Zuweisung von Verbindungen zu schaffen, bei der ein "Überbuchen" des Kommunikationssystems ermöglicht und somit die durchschnittliche Nutzung des Kommunikationssystems verbessert wird. Dabei koordiniert die globale Kommunikationsverwaltung (welche vorteilhafterweise technologieunabhängig ist) die Zuweisung der Übertragungskapazitäten durch die lokalen Kommunikationsverwaltungen (welche insbesondere technologieabhängig sein können).

Die Übertragungsstrecke kann insbesondere als Bussegment oder Busstrecke ausgebildet sein, an welcher mehrere Applikationen angeschlossen werden können. Die globalen und lokalen Kommunikationsverwaltungen können beispielsweise als Software-Applikationen ausgebildet sein, welche auf geeigneter Hardware installiert sind. Selbstverständlich sind auch fest verdrahtete Kommunikationsverwaltungen möglich.

Die im Folgenden beschriebenen Aspekte präzisieren mögliche vorgegebene Schemata, nach denen die globale Kommunikationsverwaltung die Zuweisung von Übertragungskapazitäten koordinieren kann.

Nach einem ersten Aspekt der Erfindung umfasst ein Kommunikationsverfahren für ein derartiges Kommunikationssystem :
einnen Schritt, in dem ein Ressourcennutzer eine Anfrage bezüglich einer gewünschten Kommunikationsverbindung an die globale Kommunikationsverwaltung richtet,
einen schritt, in dem die globale Kommunikationswaltung die von den lokalen Kommunikationsverwaltungen für die Kommunikationsverbingung zuzuweisenden Übertragungskapazitäten berechnet, und
einen Schritt, in dem die globale Kommunicationsverwaltung die lokalen Kommunikationsverwaltungen anweist, der gewünschten Kommunikationsverbingung die berechneten Übertragungskapazitäten zuzuweisen.

Durch dieses Verfahren wird eine dynamische Zuweisung von übertragungskapazitäten verwirklicht. Das erfindungsgemäße Kommunikationssystem kann insbesondere vorteilhaft auf ein Kraftfahrzeug-Kommunikationssystem angewendet werden, da im Kraftfahrzeug nur eine begrenzte Anzahl von Kommunikationsteilnehmern bzw. Knoten voliegt, was die Implementierung einer globalen Kommunikations-verwaltung erleichtert bzw. ermöglicht. Das erfindungsgemaße Kommunikationssystem ist jedoch generell auf Kommunikationssysteme mit einer begrenzten Anzahl von Kommunikationsteilneht.

In einer vorteilhaften Weiterbildung dieses Kommunikationsverfahren nach einem zweiten Aspekt der Erfingung sind folgende weiteren Schritte vorgeschen:
ein Schritt, in dem die globale Kommunikationsverwaltung in Antwort auf die Verbindungsanfrage eine Statusanfrage an die an der gewünschten Kommunikationsverbindung beteiligten lokalen Kommunikations verwaltungen schickt,
ein Schritt, in dem diese lokalen Kommunikationsverwaltungen einen Statusbericht an die globale Kommunikationsverwaltung schicken, und
ein Schritt, in dem die globale Kommunikationsverwaltung aus den Statusberichten die von den lokalen Kommunikationsverwaltungen bereitzustellenden Übertragungskapazitäten berechnet.
Somit muss die globale Kommunikationsverltung nicht über das komplette Wissen (insbesondere die Auslastung) bezüglich des Übertragungsstrecke oder des Netzwerkes verfügen, so dass sie weniger aufwändig gestaltet werden kann.

Nach einem dritten Aspekt der Erfindung umfasst ein Kommunikationsverfahren zur Anwendung in dem Kommunikationssystem:
einen Schritt, in dem ein Ressourcennutzer eine Anfrage bezüglich einer gewünschten Kommunikationsverbindung an die globale Kommunikationsverwaltung richtet,
einen Schritt, in dem die globale Kommunikationsverwaltung die an der gewünschten Kommunikationsverbindung beteiligten lokalen Kommunikationsverwaltungen von der Verbindungsanfrage informiert,
einen Schritt, in dem diese lokalen Kommunikationsverwaltungen untereinander eine mögliche Übertragungskapazität aushandeln, und
einen Schritt, in dem die lokalen Kommunikationsverwaltungendie ausgehandelte Übertragungskapazität an die globale Kommunikationsverwattung melden.

Somit ist die Entscheidung über die Gewährung des Verbindungswunsches weiter zu den lokalen Kommunikationsverwaltungen verschoben, was den Vorteil hat, dass die globale Kommunikationsverwaltung weiter entlastet wird.

Nach einem vierten weiteren Aspekt der Erfindung umfasst ein Kommunikationsverfahren zur Anwendung in dem einem erfundungsgemäßen Kommunikationssystem:
einen Schritt, in dem ein Ressourcennutzer eine Anfrage bezüglich einer gewünschten Kommunikationsverbindung an eine der lokalen Kommunikationsverwaltungen richtet,
einen Schritt, in dem diese lokale Kommunikationsverwaltung bei der globalen kommunikationsverwaltung anfragt, welche weiteren lokalen Kommunikationsverwaltungen an der gewünschten Kommunikationsverbindung beteiligt sind,
einen Schritt, in dem die globale Kommunikationsverwaltung der anfragenden lokale Kommunikationsverwaltung mitteilt, welche weiteren lokale Kommunikationsverwaltungen an der gewünschten Kommunikationsverbindung beteiligt sind, und
einen Schritt, in dem die beteiligten lokalen Kommunikationsverwaltungen untereinander eine mögliche Übertragungskapazität aushandeln.

Somit ist die Entscheidung über die Gewährung des Verbindungswunsches noch weiter zu den lokalen Kommunikationsverwaltungen verschoben, was den Vorteil hat, dass die globale Kommunikationsverwaltung noch weiter entlastet wird.

Nach einem fünften weiteren Aspekt der Erfindung umfasst ein Kommunikationsverfahren zur Anwendung in einem erfindungsgemäßen dem Kommunikationssystem:
einen Schritt, in dem ein Ressourcennutzer eine Anfrage bezüglich einer gewünschten Kommunikationsverbindung an eine der lokalen Kommunikationsverwaltungen richtet, und
einen Schritt, in dem diese lokale Kommunikationsverwaltung mit den weiteren an der gewünschten Kommunikationsverbindung beteiligten lokalen Kommunikationsverwaltungen eine mögliche Übertragungskapazität aushandelt.

In einer vorteilhaften Weiterbildung dieses Kommunikationsverfahren nach einem sechsten weiteren Aspekt der Erfindung ist weiterhin vorgesehen:
ein Schritt, in dem, falls der Schritt des Aushandelns zu keinem Ergebnis führt, die globale Kommunikationsverwaltung die lokalen Kommunikationsverwaltungen anweist, der gewünschten Kommunikationsverbindung eine bestimmte Übertragungskapazität zuzuweisen.

Somit erfolgt eine Eskalation zur globalen Kommunikationsverwaltung lediglich in dem Fall, dass die beteiligten lokalen Kommunikationsverwaltungen im Schritt des Aushandelns zu keiner Lösung gelangen.

Es ist vorteilhaft, wenn im Falle einer Überbuchung der Übertragungsstrecke die globale Kommunikationsverwaltung die lokalen Kommunikationsverwaltungen anweist, eine oder mehrere bestehende Verbindungen fallen zu lassen. Beispielsweise kann die globale Kommunikationsverwaltung bei einem neuen Verbindungswunsch, der zu einer Überbuchung führt, die beteiligten lokalen Kommunikationsverwaltungen eine oder mehrere Verbindungen von (im Vergleich zur neuen Verbindungsanfrage) niedrigerer Priorität fallen zu lassen, oder auch diejenige Verbindung fallen zu lassen, auf der am längsten keine Datenübertragung stattgefunden hat.

Es ist weiterhin vorteilhaft, dass die Anfrage bezüglich der gewünschten Kommunikationsverbindung weiterhin Parameter bezüglich der Qualität der gewünschten Kommunikationsverbindung umfasst.
Die Parameter bezüglich der Qualität der gewünschten Kommunikationsverbindung können beispielsweise Datenrate, Latenzzeit und/oder Jitter umfassen.

In einer vorteilhaften Weiterbildung umfasst das Kommunikationsverfahren weiterhin:
einen Schritt der Berechnung der Qualitätsparameter, die für die einzurichtende Kommunikationsverbindung auf der Übertragungsstrecke bereitgestellt werden können,
einen Schritt, in dem die globale Kommunikationsverwaltung dem Ressourcennutzer diese Qualitätsparameter meldet.

Falls die gemeldeten Qualitätsparameter nicht mit den angeforderten Qualitätsparametern übereinstimmen, kann ein Schritt vorgesehen sein, in dem der Ressourcennutzer der globalen bzw. lokalen Kommunikationsverwaltung mitteilt, ob der Verbindungswunsch, eventuell mit geänderten Qualitätsparametern, aufrecht erhalten wird.

Die oben genannten Kommunikationsverfahren können insbesondere vorteilhaft auf ein Kommunikationssystem mit einer Übertragungsstrecke angewendet werden, die mindestens zwei Teilstrecken umfasst, die mit unterschiedlichen Übertragungsstandards betrieben werden. Beispiele für solche unterschiedlichen Übertragungsstandards sind der CAN-Busstandard, der Flexray-Standard, der LIN-Busstandard und der ATM-Standard. Somit können die lokalen Kommunikationsverwaltungen technologiespezifisch, die globale Kommunikationsverwaltung hingegen technologieunabhängig ausgelegt werden. Es ergibt sich damit ein hierarchischer Aufbau des Kommunikationssystems, in dem eine technologieunabhängige Instanz (die globale Kommunikationsverwaltung) technologieabhängige Instanzen mit dem Verbindungsaufbau beauftragt. Dies hat den Vorteil, dass auf der globalen Kommunikationsverwaltung technologieunabhängige Algorithmen zur Koordination des Netzverkehrs realisiert werden können. Ferner muss die globale Kommunikationsverwaltung nicht über technologiespezifische Informationen zum Verbindungsaufbau verfügen, da der Verbindungsaufbau auf der physikalischen Ebene von den lokalen Kommunikationsverwaltungen übernommen wird. Ferner ist es unproblematisch, dem System weitere lokale Kommunikationsverwaltungen, die auf anderen Übertragungsstandards basieren, hinzuzufügen.

### Zeichnungen

Die Erfindung wird nachfolgend anhand der in den schematischen Figuren der Zeichnungen angegebenen Ausführungsbeispiele näher erläutert. Es zeigt dabei:
- Fig. 1: ein Blockdiagramm, welches die hierarchische Anordnung eines beispielhaften Kommunikationssystems zur Erläuterung von kommunikationsverfahren darstellt;
- Fig. 2: ein Blockdiagramm, welches schematisch die physikalische Anordnung eines Kommunikationssystems darstellt;
- Fig. 3: ein Ablaufdiagramm, welches ein beispielhaftes Kommunikationsverfahren zur allgemeinen Erläuterung nach einer ersten Ausführungsform mit einer für eine omnipotenten, globalen, Kommunikationsverwaltung illustriert;
- Fig. 4: ein Ablaufdiagramm, welches ein beispiethaftes Kommunikationsverfahren zur allgemeinen Erläuterung nach einer zweiten Ausführungsform mit für einer eingeschränkten, globalen, Kommunikationsverwaltung illustriert;
- Fig. 5: ein Ablaufdiagramm, welches ein Kommunikationsverfahren nach einer Ausführungsform mit einer delegativen globalen Kommunikationsverwaltung illustriert;
- Fig. 6: ein Ablaufdiagramm, welches ein Kommunikationsverfahren nach einer vierten weiteren Ausführungsform mit kooperativen lokalen Kommunikationsverwaltungen illustriert;
- Fig. 7: ein Ablaufdiagramm, welches ein Kommunikationsverfahren nach einer fünften weiteren Ausführungsform mit kooperativen lokalen Kommunikationsverwaltungen illustriert; und
- Fig. 8: ein Ablaufdiagramm, welches ein Kommunikationsverfahren nach einer sechsten weiteren Ausführungsform mit kooperativen lokalen Kommunikationsverwaltungen und Eskalation zur globalen Kommunikationsverwaltung illustriert.

### Beschreibung der Ausführungsbeispiele

In allen Figuren der Zeichnungen sind gleiche bzw. funktionsgleiche Elemente - sofern nichts Anderes angegeben ist - mit gleichen Bezugszeichen versehen worden.

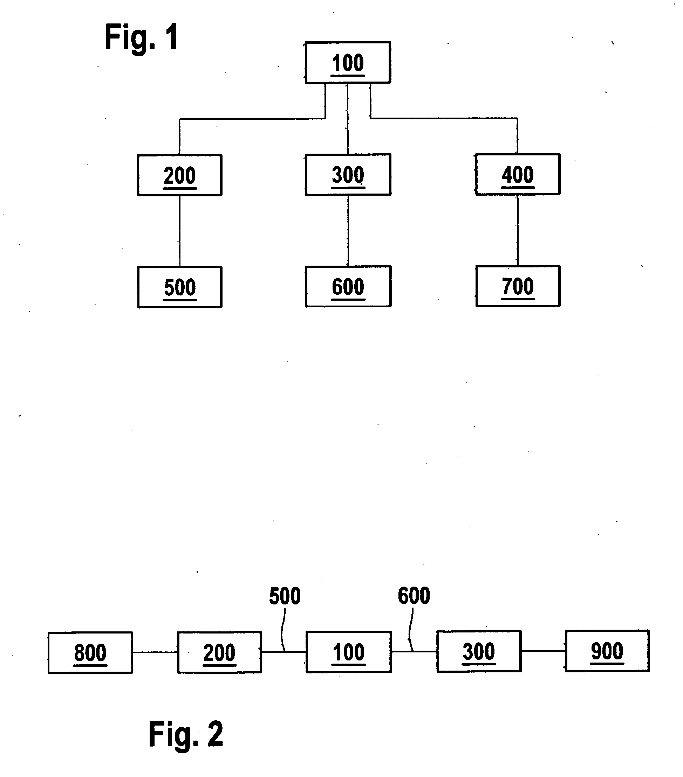

Fig. 1 zeigt ein Blockdiagramm, welches die hierarchische Anordnung eines beispielhaften Kommunikationssystems zur Erläuterung von Kommunikationsverfahren darstellt, Das Kommunikationssystem umfasst eine Übertragungsstrecke mit mehreren Teilstrecken bzw. Bus-Segmenten 500, 600 und 700, mehrere lokale Kommunikationsverwaltungen 200, 300 und 400 und eine globale Kommunikationsverwaltung 100. Die Übertragungsstrecke stellt ein Datenbus-System dar, über das mehrere logische Kommunikationsverbindungen gleichzeitig realisiert werden können. Diese drei Bus-Segmente 500, 600 und 700 können in Serie hintereinander geschaltet oder auch sternförmig um einen gemeinsamen Knoten (z.B. um die globale Kommunikationsverwaltung 100) angeordnet sein. Bei größeren Übertragungsnetzwerken sind beliebige Netzwerktopologien möglich. Jeder der drei Bus-Segmente 500, 600 und 700 ist genau eine lokale Kommunikationsverwaltung 200, 300 bzw. 400 (auch als "Network Traffic Connector" oder "NTC" bezeichnet) zugeordnet. Die lokalen Kommunikationsverwaltungen 200, 300 und 400 weisen jeder der auf dem jeweils zugeordneten Bus-Segment 500, 600 bzw. 700 realisierten logischen Verbindungen eine bestimmte Übertragungskapazität zu. Beispielsweise übernehmen sie bei Übertragungsformaten mit Zeitslots (z.B. Flexray-Bussystem) die Zuteilung von Slots zu den einzelnen Verbindungen. Die globale Kommunikationsverwaltung 100 (auch als "Global Traffic Connector" oder "GTC" bezeichnet) koordiniert die Zuweisung der Übertragungskapazität durch die lokalen Kommunikationsverwaltungen 200 - 400, wie im Folgenden noch genauer beschrieben werden wird.

Fig. 2 zeigt ein Blockdiagramm, welches schematisch die physikalische Anordnung eines beispielhaften erfindungsgemaßen Kommunikationssystems zur Erläuterung von Kommunicationsverfahren darstellt. Das Kommunikationssystem enthält eine Übertragungsstrecke mit zwei Bus-Segmenten 500 und 600, denen jeweils eine globale Kommunikationsverwaltung 200 bzw. 300 zugeordnet ist. Eine globale Kommunikationsverwaltung 100 ist jeweils mit den zwei Bus-Segmenten 500 und 600 verbunden. Wie in Fig. 2 dargestellt kommunizieren zwei Applikationen 800 und 900 (im Folgenden auch als "Ressourcennutzer" bezeichnet) über die Übertragungsstrecke 500, 600 miteinander.

Als Beispiel für eine solche Konfiguration kann die Applikation 800 durch eine im Armaturenbrett eines Fahrzeugs vorgesehene Head-Unit gegeben sein und die Applikation 900 kann durch ein im Kofferraum des Fahrzeugs untergebrachter DVD-Wechsler bzw. einen darauf implementierten Server gegeben sein. Die Head-Unit kann über die Übertragungsstrecke 500, 600 eine Verbindung zum DVD-Wechsler herstellen und die vom DVD-Wechsler übertragenen Video-Informationen mittels eines an die Head-Unit angeschlossenen Displays wiedergeben. In diesem Falle existieren für die Verbindung bestimmte Mindestanforderungen an die Verbindungsqualität, insbesondere an die Datenrate und die maximale Verzögerungszeit. Falls diese Mindestanforderungen nicht eingehalten werden, kann es zu Ausfällen in der Video-Übertragung kommen.

Die Applikation 800 richtet eine Verbindungsanfrage entweder an eine der lokalen Kommunikationsverwaltungen 200 oder an die globale Kommunikationsverwaltung 100. Diese Verbindungsanfrage enthält eine Liste mit die angeforderte Kommunikationsverbindung beschreibenden Parametern, wie z.B. maximale Datenrate, mittlere Datenrate, minimale Datenrate, maximal zulässige Verzögerung, mittlere zulässige Verzögerung, maximal zulässige Varianz der Verzögerung (Jitter), maximal zulässige Verlustrate, lokale Priorität, globale Priorität, Quelle der Kommunikation und Senke der Kommunikation. Diese Liste kann alle möglichen Parameter oder auch nur alle für die Kommunikationsverbindung relevanten Parameter umfassen. Unter lokaler Priorität wird hierbei eine technologieabhängige Priorität (z.B. innerhalb eines Bussystems) und unter globaler Priorität eine technologieunabhängige Priorität verstanden. Der Empfänger der Verbindungsanfrage (also lokale oder globale Kommunikationsverwaltung) überprüft die geforderten Parameter hinsichtlich der Erfüllbarkeit auf Grundlage der vorhandenen Netztopologie, des aktuellen Netzzustandes und des antizipierten, gemessenen und/oder modellierten Netzverhaltens. Je nach Bedarf zieht dabei die globale oder lokale Kommunikationsverwaltung auch weitere betroffene Komponenten (zum Beispiel weitere lokale Kommunikationsverwaltungen) mit ein, um weitere Informationen über den Zustand des Kommunikationssystems zu ermitteln. Die lokale bzw. globale Kommunikationsverwaltung ermittelt also auf Basis der Verbindungsanfrage und des Systemzustandes die erfüllbaren und/oder nicht erfüllbaren Parameter für die angeforderte Kommunikationsverbindung.

Falls nicht alle angeforderten Parameter erfüllt werden können, kann die lokale bzw. globale Kommunikationsverwaltung eine Verhandlungsphase mit der Applikation initiieren, in der einzelne oder alle Parameter verhandelt bzw. geändert werden. So könnte im oben ausgeführten Beispiel die Head-Unit über zwei Darstellungsmodi verschiedener Bildqualität mit jeweils 100 kbit/s und 20 kbit/s verfügen. Wenn die Head-Unit nun eine Verbindung mit einer Datenrate von 100 kbit/s anfordert, auf der Übertragungsstrecke jedoch nur noch 50 kbit/s zur Verfügung stehen, dann könnte die Head-Unit die Parameter der Verbindungsanfrage abändern und auf eine Datenrate von 20 kbit/s modifizieren, da bei einer zugewiesenen Datenrate von 50 kbit/s ein Großteil der Übertragungskapazität ungenutzt bleiben würde.

Wenn die für die Verbindung notwendigen und verfügbaren Parameter feststehen, weisen die lokalen Kommunikationsverwaltungen der Kommunikationsverbindung Ressourcen (also bestimmte Übertragungskapazitäten) zu. Eine solche Zuweisung von Ressourcen durch eine Kommunikationsverwaltung an einen Ressourcennutzer wird auch als "Verkehrsvertrag" bezeichnet. Im Rahmen eines solchen Verkehrvertrages werden also für bestimmte QoS-Parameter Werte vereinbart, die dann vom Kommunikationssystem mit einer bestimmten Vertrauensgüte garantiert werden.

Nachdem die Kommunikationsparameter zwischen der Applikation und der lokalen oder der globalen Kommunikationsverbindung erfolgreich ausgehandelt wurde erfolgt die Freigabe der Verbindung mit den vereinbarten Eigenschaften. Dazu beauftragt die globale Kommunikationsverwaltung oder die lokale Kommunikationsverwaltung an die die Verbindungsanfrage gerichtet wurde die weiteren betroffenen Netzelemente, die betroffenen Bus-Segmente entsprechend der Anforderungen des neuen sowie der bestehenden Verkehrsverträge zu konfigurieren. Die betroffenen Netzelemente sind hierbei zumindest die den einzelnen Bus-Segmenten zugeordneten lokalen Kommunikationsverwaltungen, können jedoch auch lokale Kommunikationstreiber, z.B. Busscheduler oder dergleichen umfassen. Die Konfiguration der einzelnen Bus-Segmente umfasst beispielsweise das Setzen von Prioritäten der neuen sowie von bestehenden Verbindungen, die Konfiguration von Eingangs- und Ausgangspuffer und von Schedulingparametern und -strategien. Beispielsweise können die Puffer bei einem größeren Jitter auch größer ausgelegt werden.

Nach dem Zustandekommen eines Verkehrsvertrages kann derselbe in eine Liste mit im Kommunikationssystem vorliegenden Verkehrsverträgen eingetragen werden. Diese Liste kann beispielsweise in einem der globalen Kommunikationsverwaltung zugeordneten Speicher gespeichert sein. Bei Beendigung einer Kommunikationsverbindung wird der zugehörige Verkehrsvertrag aus dieser Liste entfernt.

In einer Ausbildungsform der vorliegenden Erfindung wird zwischen Verbindungen (bzw. Verkehrsverträgen) mit garantierter Verfügbarkeit und solchen mit statistischer Verfügbarkeit unterschieden. Verbindungen mit garantierter Verfügbarkeit werden fest in die Liste der Verkehrsverträge eingetragen und im Kommunikationssystem fest eingestellt. Somit steht ein bestimmter Anteil der Übertragungsleistung nicht für die oben beschriebene dynamische Aushandlung zwischen Ressourcennutzer und Kommunikationsverwaltungen zur Verfügung. Es wird also ein bestimmter Prozentanteil der Übertragungsleistung bereits fest für die Kommunikation zwischen Ressourcennutzern am Netz bereitgestellt. Ein solcher Ressourcennutzer braucht somit auch keine Verbindungsanfrage mehr für solche garantierten Verbindungen zu stellen. Ein Beispiel für eine solche garantierte Verbindung ist die Verbindung zwischen dem Klopfsensor im Fahrzeug und der Applikation, die die einzuspritzende Treibt stoffmenge berechnet. Bei dieser Verbindung findet eine stete Übertragung von Daten während der gesamten Laufzeit des Fahrzeugs statt, so dass dieser Verbindung in statischer Weise Übertragungsressourcen zugewiesen werden.

Für Verbindungen mit statistischer Verfügbarkeit hingegen wird vom Ressourcennutzer bei Bedarf eine Verbindungsanfrage an die (lokale oder globale) Kommunikationsverwaltung gerichtet. Gewährte Verbindungen werden lediglich mit einer begrenzten Vertrauensgüte bereitgestellt, die insbesondere von der Priorität der Kommunikationsverbindung abhängt. Liegt dann am Netz eine Anfrage bezüglich einer Kommunikationsverbindung mit höherer Priorität vor, dann kann die Kommunikationsverbindung mit niedrigerer Priorität fallengelassen werden und der zugehörige Verkehrsvertrag aus der Liste der Verkehrsverträge gelöscht werden.

Ein wesentlicher Vorteil bei dem oben beschriebenen Ansatz ist es, dass Ressourcen (Übertragungskapazitäten) dynamisch zugeteilt werden und nicht schon vor der Inbetriebnahme des Systems feststehen, wie es in herkömmlichen Übertragungssystemen der Fall war. Somit kann eine ausreichende Systemleistung auch mit enger ausgelegten Übertragungskapazitäten realisiert werden.

Die im Kommunikationssystem miteinander kombinierten Bus-Segmente 500, 600 und 700 können unterschiedlichen Übertragungsstandards (z.B. CAN, Flexray, LIN, ATM etc.) unterliegen. In diesem Falle sind die lokalen Kommunikationsverwaltungen 200, 300 und 400 technologiespezifisch, wohingegen die globale Kommunikationsverwaltung 100 technologieunabhängig ist.
Somit weisen die verschiedenen Bus-Segmente oder Bus-Systeme 500, 600 und 700 unterschiedliche Charakteristika auf hinsichtlich Übertragungsbandbreite und -geschwindigkeit sowie Unterschiede hinsichtlich der Zuweisung von Netzwerk-Ressourcen an Applikationen. Mit dem vorgeschlagenen hierarchischen Aufbau des Kommunikationssystems braucht jedoch die globale Kommunikationsverwaltung 100 nicht über technologiespezifische Informationen zum Verbindungsaufbau verfügen, da der Verbindungsaufbau auf der physikalischen Ebene von den lokalen Kommunikationsverwaltungen 200-400 übernommen wird.

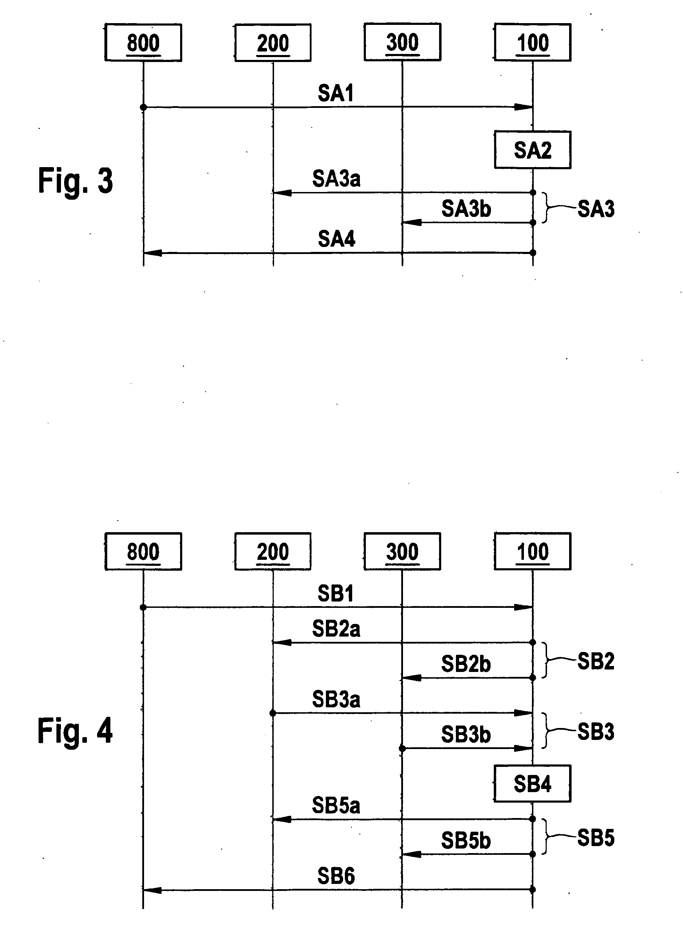

Im Folgenden werden anhand der Figuren 3 bis 8 mehrere vorteilhafte Ausführungsformen von erfindungsgemäßen Kommunikationsverfahren mit dem oben dargestellten Kommunikationssystem beschrieben. Diese Ausführungsformen unterscheiden sich insbesondere in Bezug auf den Kommunikationsablauf und auf die Aufteilung der Verantwortung zwischen lokalen und globalen Kommunikationsverwaltungen.

### Kommunikationsverfahren zur allgemeinen Erläuterung

Erste Ausfürungsform
Fig. 3 zeigt ein Ablaufdiagramm, welches ein beispielhaftes Kommunikationsverfahren zur allgemeinen Erläuterung nach einer ersten Ausführungsform mit einer für eine omnipotenten, globalen, Kommunikationsverwaltung 100 illustriert.

In Schritt SA1 sendet die Applikation 800 (der Ressourcennutzer) eine Anfrage bezüglich einer gewünschten Kommunikationsverbindung an die globale Kommunikationsverwaltung 100. Diese Anfrage enthält, wie oben beschrieben, alle möglichen oder alle relevanten Parameter bezüglich des Verbindungsaufbaus.

In Schritt SA2 prüft die globale Kommunikationsverwaltung 100 die Verbindungsanfrage. Zunächst ermittelt die globale Kommunikationsverwaltung 100 welche Bus-Segmente an der angefragten Verbindung beteiligt sind. Ferner prüft die globale Kommunikationsverwaltung 100, ob die auf den beteiligten Bus-Segmenten 500 und 600 zur Verfügung stehenden Ressourcen ausreichend sind, um die von der Applikation 800 geforderten Kommunikationsarameter zu erfüllen. Falls dies nicht der Fall ist, kann die globale Kommunikationsverwaltung 100 in einem nicht näher dargestellten Schritt die lokalen Kommunikationsverwaltungen 200 und/oder 300 anweisen, eine oder mehrere bestehende Verbindungen mit niedrigerer Qualität abzuwerfen. Alternativ dazu kann die globale Kommunikationsverwaltung 100 der Applikation 800 melden, dass der gewünschte Verbindungsaufbau nicht möglich ist. Weiterhin alternativ dazu kann die globale Kommunikationsverwaltung 100 der Applikation 800 gegenüber der Verbindungsanfrage reduzierte Verbindungsparameter anbieten, die von der Applikation 800 bestätigt werden können; es kann also eine Phase der Verhandlung zwischen der globalen Kommunikationsverwaltung und der Applikation 800 durchgeführt werden.

Falls die auf den Bus-Segmenten 500 und 600 zur Verfügung stehenden Ressourcen ausreichend sind, weist die globale Kommunikationsverwaltung 100 in Schritt SA3 (bzw. den Teilschritten SA3a und SA3b) die lokalen Kommunikationsverwaltungen 200 und 300 an, der gewünschten Kommunikationsverbindung die notwendigen Ressourcen, also insbesondere die berechneten Übertragungskapazitäten zuzuweisen.

In Schritt SA4 schließlich teilt die globale Kommunikationsverwaltung 100 der Applikation 800 mit, dass der Verbindungswunsch gewährt wurde.

In nicht näher dargestellten Schritten folgt weiterhin die Freigabe der Verbindung sowie das Eintragen des neuen Verkehrsvertrags in die Liste der Verkehrsverträge (dies gilt auch für die im Folgenden beschriebenen Ausführungsformen).

In dieser ersten Ausführungsform Kommunikationsverfahren besitzt die globale Kommunikationsverwaltung 100 das komplette Wissen über die Auslastung der einzelnen Bus-Segmente 500 und 600. Dies hat den Vorteil, dass der Kommunikationsaufwand im Vergleich zu den in Folgenden beschriebenen Ausführungsformen gering ist, birgt aber den Nachteil, dass die globale Kommunikationsverwaltung 100 aufwändiger ausgelegt ist und insbesondere über einen ausreichend großen Wissensspeicher verfügen muss.

### Zweite Ausführungsform Kommunikationsverfahren zur allgemeinen Erläuterung

Fig. 4 zeigt ein Ablaufdiagramm, welches ein beispielhaftes Kommunikationsverfahren nach einer zweiten Ausführungsform zur allgemeinnen Erläuterung für mit einer im Vergleich zur ersten Ausführungsform vorherigen Kommunikationsverfahren eingeschränkten, globalen Kommunikationsverwaltung 100 illustriert. Dieses Kommunikationsverfahren nach der zweiten Ausführungsform unterscheidet sich von dem vorherigen Verfahrer ersten Ausführungsform darin, dass die globale Kommunikationsverwaltung 100 nicht über das komplette Wissen bezüglich der Auslastung der einzelnen Bus-Segmente verfügt, sondern dieses Wissen zunächst bei den lokalen Kommunikationsverwaltungen 200, 300 einholen muss.

In Schritt SB1 sendet die Applikation 800 (der Ressourcennutzer) eine Anfrage bezüglich einer gewünschten Kommunikationsverbindung an die globale Kommunikationsverwaltung 100.

Nachdem die globale Kommunikationsverwaltung 100 in Antwort auf die Verbindungsanfrage ermittelt hat, welche Bus-Segmente bzw. lokalen Kommunikationsverwaltungen an der angefragten Verbindung beteiligt sind, sendet sie in Schritt SB2 eine Statusanfrage an die beteiligten lokalen Kommunikationsverwaltungen 200 und 300.

In Schritt SB3 senden die lokalen Kommunikationsverwaltungen 200 und 300 in Antwort auf die Statusanfrage einen Statusbericht an die globale Kommunikationsverwaltung 100. Dieser Statusbericht enthält Informationen über die Auslastung der Bus-Segmente 500 und 600, was die globale Kommunikationsverwaltung 100 in die Lage versetzt, eine Entscheidung darüber zu treffen, ob der Verbindungswunsch gewährt werden kann.

In Schritt SB4 prüft die globale Kommunikationsverwaltung 100, ähnlich wie in Schritt SA2, die Verbindungsanfrage, insbesondere ob die auf den Bus-Segmenten 500 und 600 zur Verfügung stehenden Ressourcen ausreichend sind, um die von der Applikation 800 geforderten Kommunikationsarameter zu erfüllen. Dabei werden die im Statusbericht enthaltenen Informationen über die Auslastung der Bus-Segmente 500 und 600 berücksichtigt.

Die Schritte SB5 und SB6 entsprechen den Schritten SA3 und SA4 der ersten Ausführungsform vorherigen kommunikationsverfahrens und werden daher nicht näher erläutert.

In dieser zweiter weiteren Kommunikationsverfahren Ausführungsform besitzt die globale Kommunikationsverwaltung 100 nicht die kompletten Informationen über die Auslastung der einzelnen Bus-Segmente 500 und 600, sondern holt sich diese Informationen bei Bedarf von den betroffenen lokalen Kommunikationsverwaltungen 200 und 300 ein. Dies hat den Vorteil, dass die globale Kommunikationsverwaltung 100 weniger aufwändig gestaltet werden kann, hat aber den Nachteil, dass der Kommunikationsaufwand im Vergleich zum vorherigen Kommunikationsverfahren ersten Ausführungsform höher ist.

### Dritte Ausführungsform

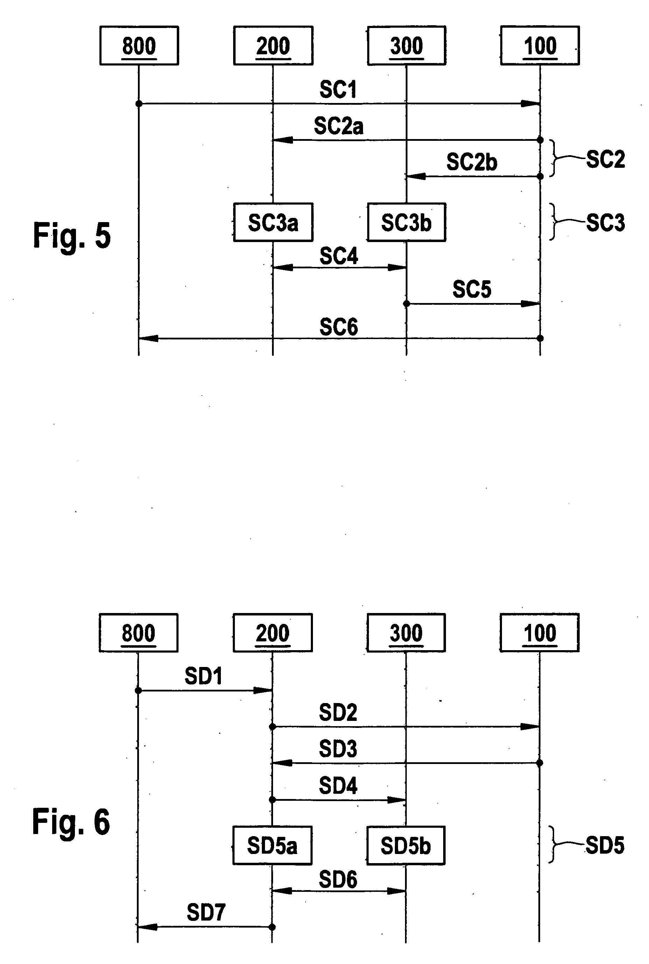

Fig. 5 zeigt ein Ablaufdiagramm, welches ein Kommunikationsverfahren nach einer Ausführungsform mit einer delegativen globalen Kommunikationsverwaltung 100 illustriert. In Schritt SC1 sendet die Applikation 800 (der Ressourcennutzer) eine Anfrage bezüglich einer gewünschten Kommunikationsverbindung an die globale Kommunikationsverwaltung 100.

In Schritt SC2 leitet die globale Kommunikationsverwaltung 100 die Verbindungsanfrage mit allen relevanten Parametern weiter an die an der gewünschten Kommunikationsverbindung beteiligten lokalen Kommunikationsverwaltungen 200 und 300.

In Schritt SC3 (bzw. den Schritten SC3a und SC3b) prüfen die lokalen Kommunikationsverwaltungen 200 und 300 die Verbindungsanfrage, also ob die auf den jeweiligen Bus-Segmenten 500 und 600 zur Verfügung stehenden Ressourcen ausreichend sind, um die von der Applikation 800 geforderten Kommunikationsarameter zu erfüllen. Die lokalen Kommunikationsverwaltungen 200 und 300 errechnen dabei insbesondere die jeweils mögliche Qualität der Verbindung auf den jeweiligen Bus-Segmenten 500 und 600, bzw. ob sie die angeforderte Verbindungsqualität bereitstellen können.

In Schritt SC4 handeln die lokalen Kommunikationsverwaltungen 200 und 300 zwischen sich eine Verbindungsqualität aus, die für die angeforderte Verbindung zur Verfügung gestellt werden kann. Dies kann beispielsweise wie folgt ablaufen: Es sei angenommen, dass die Applikation 800 eine Verbindung mit der maximalen Datenrate anfordert. Die lokale Kommunikationsverwaltung 200 stellt beispielsweise fest, dass auf dem Bus-Segment 500 eine Datenrate von 300 kbit/s bereitgestellt werden kann und meldet dies an die lokale Kommunikationsverwaltung 300. Diese stellt jedoch fest, dass auf dem Bus-Segment 600 lediglich eine Datenrate von 200 kbit/s bereitgestellt werden kann, was sie wiederum an die lokale Kommunikationsverwaltung 200 meldet. Obwohl die lokale Kommunikationsverwaltung 200 nun eine Datenrate von 300 kbit/s bereitstellen könnte, würde dies eine überflüssige Bereitstellung von Ressourcen darstellen, da sich in diesem Fall auf dem Bus-Segment 600 ein Flaschenhals ergeben würde. Die maximale Datenrate, die auf den Bus-Segmenten 500 und 600 bereitgestellt werden kann wird somit von den lokalen Kommunikationsverwaltungen 200 und 300 auf 200 kbit/s festgesetzt und die entsprechenden Ressourcen werden von den lokalen Kommunikationsverwaltungen 200 und 300 zugewiesen.

Im Schritt SC5 meldet mindestens eine der beiden lokalen Kommunikationsverwaltungen 200 und 300 (im vorliegenden Beispiel die lokale Kommunikationsverwaltung 300) die ausgehandelten Parameter an die globale Kommunikationsverwaltung 100, welche im Schritt SC6 schließlich der Applikation 800 mitteilt, ob (und wenn ja, zu welchen Bedingungen) der Verbindungswunsch gewährt wurde. Falls die gewährten Parameter nicht den ursprünglich von der Applikation 800 geforderten entsprechen, kann, wie oben beschrieben, eine weitere Phase der Verhandlung zwischen der Applikation 800 und der globalen Kommunikationsverwaltung 100 erfolgen.

In dieser Ausführungsform ist die Entscheidung über die Gewährung des Verbindungswunsches im vergleich zur den vorherigen Kommunikationsverfahren ersten und zweiten Ausführungsform noch weiter zu den lokalenKommunikationverwaltung 200 und 300 verschoben. Dies hat den Vorteil, dass die globale Kommunikationsverwaltung 100 weiter entlastet wird.

### Bortyr weitere Ausführungform

Fig. 6 zeigt ein Ablaufdiagramm, welches ein Kommunikationsverfahren nach einer vierten weiteren Ausführungsform mit kooperativen lokalen Kommunikationsverwaltungen illustriert.

Diese vierte weitere Ausführungsform unterscheidet sich von den oben beschriebenen Ausführungsformen dadurch, dass die Applikation 800 die Verbindungsanfrage in Schritt SD1 nicht an die globale Kommunikationsverwaltung 100 sondern an die lokale Kommunikationsverwaltung 200 sendet.

Die lokalen Kommunikationsverwaltungen 200 und 300 verfügen jedoch nicht über ausreichende Informationen über die Netzwerktopologie, mit anderen Worten, die lokale Kommunikationsverwaltung 200 weiß nicht, welche anderen Bus-Segmente an der angeforderten Verbindung beteiligt sind. Auf diese Information hat jedoch die globale Kommunikationsverwaltung 100 Zugriff (beispielsweise können sie in einem Speicher der globalen Kommunikationsverwaltung 100 abgespeichert sein). Die lokale Kommunikationsverwaltung 200 meldet daher in Schritt SD2 die Verbindungsanfrage an die globale Kommunikationsverwaltung 100 und fragt an, welche anderen lokalen Kommunikationsverwaltungen an der gewünschten Verbindung beteiligt sind.

In Antwort darauf prüft die globale Kommunikationsverwaltung 100, welche weiteren lokalen Kommunikationsverwaltungen an der gewünschten Verbindung beteiligt sind und teilt in Schritt SD3 diese weiteren lokalen Kommunikationsverwaltungen der lokalen Kommunikationsverwaltung 200 mit. Im angegebenen Beispiel, teilt sie also der lokalen Kommunikationsverwaltung 200 mit, dass auch die lokale Kommunikationsverwaltung 300 (bzw. das dieser zugeordnete Bus-Segment 600) an der Verbindung beteiligt ist.

In Schritt SD4 teilt die lokale Kommunikationsverwaltung 200 die Verbindungsanfrage der lokalen Kommunikationsverwaltung 300 mit. Die Schritte SD5a, SD5b und SD6 entsprechen den Schritten SC3a, SC3b und SC4 der dritten vorherigen Ausführungsform und werden daher nicht näher erläutert.

Im Schritt SD7 teilt die lokale Kommunikationsverwaltung schließlich der Applikation 800 mit, ob (und wenn ja, zu welchen Bedingungen) der Verbindungswunsch gewährt wurde. Falls die gewährten Parameter nicht den ursprünglich von der Applikation 800 geforderten entsprechen, kann, wie oben beschrieben, eine weitere Phase der Verhandlung zwischen der Applikation 800 und der lokalen Kommunikationsverwaltung 200 erfolgen.

In dieser Ausführungsform ist die Entscheidung über die Gewährung des Verbindungswunsches im Vergleich zur ersten bis dritten Ausführungsform den vorherigen Kommunikationsverfahren noch weiter zu den lokalen Kommunikationsverwaltungen 200 und 300 verschoben. Dies hat den Vorteil, dass die globale Kommunikationsverwaltung 100 noch weiter entlastet wird.

### Fünfte weitere Ausführungsform

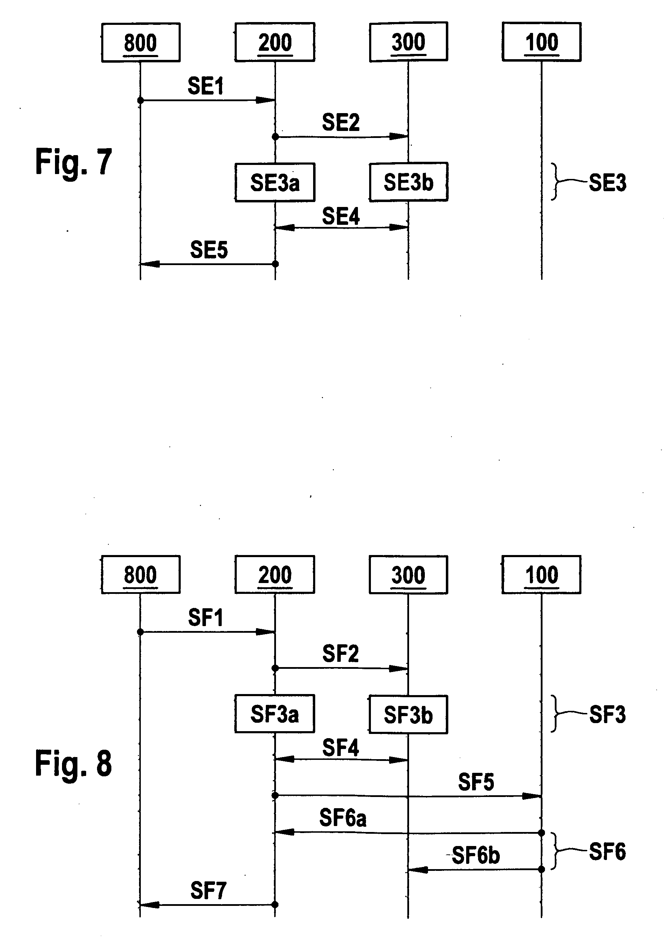

Fig. 7 zeigt ein Ablaufdiagramm, welches ein Kommunikationsverfahren nach einer fünften weiteren Ausführungsform mit kooperativen lokalen Kommunikationsverwaltungen illustriert. Dieses Kommunikationsverfahren unterscheidet sich von den oben beschriebenen Kommunikationsverfahren dadurch, dass die globale Kommunikationsverwaltung 100 zunächst nicht an der Zuweisung der Ressourcen beteiligt ist.

In Schritt SE1 sendet die Applikation 800 die Verbindungsanfrage, wie in Schritt SD1, an die lokale Kommunikationsverwaltung 200.

In dieser Ausführungsform übernehmen die lokalen Kommunikationsverwaltungen 200 und 300 weitere Funktionen der globalen Kommunikationsverwaltung 100. Insbesondere verfügen sie hierbei über ausreichende Informationen bezüglich der Netzwerktopologie, so dass sie autonom entscheiden können, welche weiteren Bus-Segmente an der angeforderten Verbindung beteiligt sind, nämlich im vorliegenden Beispiel noch die Kommunikationsverwaltung 300.

Die Schritte SE2, SE3a, SE3b, SE4 und SE5 entsprechen den Schritten SD4, SD5a, SD5b, SD6 und SD7 der vierten vorherigen Ausführungsform und werden daher nicht näher erläutert.

### Sechste weitere Ausführungsform

Fig. 8 zeigt ein Ablaufdiagramm, welches ein Kommunikationsverfahren nach einer sechsten weiteren Ausführungsform mit kooperativen lokalen Kommunikationsverwaltungen 200 und 300 und Eskalation zur globalen Kommunikationsverwaltung illustriert.

Die Schritte SF1 bis SF4 entsprechen den Schritten SE1 bis SE4 der fünften Ausführungsform. Im dargestellten Fall wird jedoch keine Einigung zwischen den lokalen Kommunikationsverwaltungen erzielt, so dass in Schritt SF5 eine Eskalation zur globalen Kommunikationsverwaltung erfolgt. Beispielsweise kann seitens der Applikation 800 eine Verbindungsanfrage für eine Verbindung mit einer bestimmten Qualität vorliegen. Wenn eine der beiden lokalen Kommunikationsverwaltungen 200 und 300 diese Qualität nicht bereitstellen kann meldet die lokale Kommunikationsverwaltung 200 dies in Schritt SF5, zusammen mit den angeforderten Verbindungsparametern, der globalen Kommunikationsverwaltung 100.

Die globale Kommunikationsverwaltung 100 prüft nun die Verbindungsanfrage unter Berücksichtigung des ihr bekannten Systemzustands. Wenn beispielsweise die Verbindungsanfrage für eine Verbindung von höherer Priorität als die bereits auf den Bus-Segmenten 500 und 600 laufenden Verbindungen ist, dann veranlasst die globale Kommunikationsverwaltung 100 in Schritt SF6 (bzw. den Teilschritten SF6a und/oder SF6b) die lokalen Kommunikationsverwaltungen 200 und/oder 300 eine oder mehrere dieser Verbindungen fallen zu lassen und stattdessen die Übertragungskapazität für die angefragte Verbindung bereitzustellen. Die Mitteilung über die Bereitstellung der Übertragungskapazität an die Applikation 800 erfolgt in Schritt SF7.

Ein Vorteil der fünften und sechsten beiden letzten Ausführungsformen ist der, dass die globale Kommunikationseinrichtung 100 nur in dem Fall in Anspruch genommen wird, wenn keine Einigung zwischen den lokalen Kommunikationsverwaltungen 200 und 300 erzielt werden kann. Somit ist eine noch weitere Verlagerung des Entscheidungsprozesses zu den lokalen Kommunikationsverwaltungen 200 und 300 gegeben.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

So kann der Informationsfluss in den dargestellten Ausführungsformen in vielfältiger Weise geändert werden. Beispielsweise kann in Schritt SD3 vierten in der Ausführungsform die globale Kommunikationsverwaltung 100 die Verbindungsanfrage auch an die lokale Kommunikationsverwaltung 300 melden, woraufhin sich diese bei der lokale Kommunikationsverwaltung 200 meldet, anstatt die weite. ren beteiligten lokalen Kommunikationsverwaltungen der lokalen Kommunikationsverwaltung 200 zu melden.

## Patentansprüche

1. Kommunikationsverfahren zur Anwendung in einem Kommunikationssystem, **gekennzeichnet durch**:
einen Schritt (SC1), in dem ein Ressourcennutzer (800) eine Anfrage bezüglich einer gewünschten Kommunikationsverbindung an eine globale Kommunikationsverwaltung (100) für eine Übertragungsstrecke richtet,
einen Schritt (SC2), in dem die globale Kommunikationsverwaltung (100) an der gewünschten Kommunikationsverbindung beteiligte lokale Kommunikationsverwaltungen (200, 300), die jeweils ihnen zugewiesenen Teilstrecken der Übertragungsstrecke eine Übertragungskapazität zuweisen, von der Verbindungsanfrage informiert,
einen Schritt (SC4), in dem diese lokalen Kommunikationsverwaltungen (200, 300) untereinander eine mögliche Übertragungskapazität aushandeln,
einen Schritt (SC5), in dem die lokalen Kommunikationsverwaltungen (200, 300) die ausgehandelte Übertragungskapazität an die globale Kommunikationsverwaltung (100) melden und
einen Schritt, in dem die globale Kommunikationsverwaltung die Zuweisung von Übertragungskapazitäten koordiniert.

2. Kommunikationsverfahren zur Anwendung in einem Kommunikationssystem, **gekennzeichnet durch**:
einen Schritt (SD1, SE1; SF1), in dem ein Ressourcennutzer (800) eine Anfrage bezüglich einer gewünschten Kommunikationsverbindung an eine lokale Kommunikationsverwaltung (200), die einer ihr zugewiesenen Teilstrecke einer Übertragungstrecke eine Übertragungskapazität zuweist, richtet, einen Schritt (SD6, SE4, SF4), in dem die lokale Kommunikationsverwaltung (200) mit weiteren an der gewünschten Kommunikationsverbindung beteiligten lokalen Kommunikationsverwaltungen (300), die weiteren jeweils ihnen zugewiesenen Teilstrecken der Übertragungstrecke eine Übertragungskapazität zuweisen, eine mögliche Übertragungskapazität aushandelt und
einen Schritt, in dem eine globale Kommunikationsverwaltung der Übertragungsstrecke die Zuweisung von Übertragungskapazitäten koordiniert.

3. Kommunikationsverfahren nach Anspruch 2, **gekennzeichnet durch**:
einen Schritt (SD2), in dem die lokale Kommunikationsverwaltung (200) bei der globalen Kommunikationsverwaltung (100) anfragt, welche weiteren lokalen Kommunikationsverwaltungen an der gewünschten Kommunikationsverbindung beteiligt sind,
einen Schritt (SD3), in dem die globale Kommunikationsverwaltung (100) der anfragenden lokale Kommunikationsverwaltung (200) mitteilt, welche weiteren lokale Kommunikationsverwaltungen (300) an der gewünschten Kommunikationsverbindung beteiligt sind, und

4. Kommunikationsverfahren nach Anspruch 2, **gekennzeichnet durch**:
einen Schritt, in welchem die lokale Kommunikationsverwaltung (200) anhand eigener Informationen entscheidet, welche weiteren lokalen Kommunikationsverwaltungen (300) an der Verbindung beteiligt sind.

5. Kommunikationsverfahren nach einem der Ansprüche 2 bis 4, **gekennzeichnet durch**:
einen Schritt (SD7), in welchem die lokale Kommunikationsverwaltung (200) dem Ressourcennutzer (800) die ausgehandelte Übertragungskapazität mitteilt.

6. Kommunikationsverfahren zur Anwendung in einem Kommunikationssystem nach Anspruch 2, **gekennzeichnet durch**:
einen Schritt (SF6), in dem, falls der Schritt des Aushandelns zu keinem Ergebnis führt, die globale Kommunikationsverwaltung die lokalen Kommunikationsverwaltungen anweist, der gewünschten Kommunikationsverbindung eine bestimmte Übertragungskapazität zuzuweisen.

7. Kommunikationsverfahren nach einem der vorhergehenden Ansprüche, **dadurch gekennzeichnet, dass** im Falle einer Überbuchung der Übertragungsstrecke die globale Kommunikationsverwaltung (100) die lokalen Kommunikationsverwaltungen (200, 300, 400) anweist, eine oder mehrere bestehende Verbindungen fallen zu lassen.

8. Kommunikationsverfahren nach einem der vorhergehenden Ansprüche, **dadurch gekennzeichnet, dass** die Anfrage bezüglich der gewünschten Kommunikationsverbindung weiterhin Parameter bezüglich der Qualität der gewünschten Kommunikationsverbindung umfasst.

9. Kommunikationsverfahren nach Anspruch 8, **dadurch gekennzeichnet, dass** die Parameter bezüglich der Qualität der gewünschten Kommunikationsverbindung Datenrate, Latenzzeit und/oder Jitter umfassen.

10. Kommunikationsverfahren nach einem der Ansprüche 8 oder 9, **gekennzeichnet durch**:
einen Schritt der Berechnung der Qualitätsparameter, die für die einzurichtende Kommunikationsverbindung auf der Übertragungsstrecke bereitgestellt werden können,
einen Schritt, in dem die globale Kommunikationsverwaltung (100) dem Ressourcennutzer (800) diese Qualitätsparameter meldet.

11. Kommunikationsverfahren nach Anspruch 10, **gekennzeichnet durch**:
falls die gemeldeten Qualitätsparameter nicht mit den angeforderten Qualitätsparametern übereinstimmen, einen Schritt, in dem der Ressourcennutzer (800) der globalen bzw. lokalen Kommunikationsverwaltung (100, 200, 300, 400) mitteilt, ob der Verbindungswunsch, eventuell mit geänderten Qualitätsparametern, aufrecht erhalten wird.

12. Kommunikationsverfahren nach einem der vorhergehenden Ansprüche, **dadurch gekennzeichnet, dass** die Teilstrecken (500, 600, 700) mindestens zwei Teilstrecken umfassen, die mit unterschiedlichen Übertragungsstandards betrieben werden.

## Claims

1. Communication method for application in a communication system, **characterized by**:
a step (SC1) in which a user of resources (800) directs a request with respect to a desired communication connection to a global communication administration (100) for a transmission link,
a step (SC2) in which the global communication administration (100) informs local communication administrations (200, 300) involved in the desired communication connection, which in each case assign a transmission capacity to sections of the transmission link which are assigned to them, of the connection request,
a step (SC4) in which these local communication administrations (200, 300) negotiate a possible transmission capacity with one another,
a step (SC5) in which the local communication administrations (200, 300) report the negotiated transmission capacity to the global communication administration (100) and
a step in which the global communication administration coordinates the assignment of transmission capacities.

2. Communication method for application in a communication system, **characterized by**:
a step (SD1, SE1, SF1) in which a user of resources (800) directs a request with respect to a desired communication connection to a local communication administration (200) which assigns a transmission capacity to a section of a transmission link which is assigned to it,
a step (SD6, SE4, SF4) in which the local communication administration (200) negotiates a possible transmission capacity with other local communication administrations (300) involved in the desired communication connection, which assign a transmission capacity to other sections of the transmission link which are in each case assigned to them, and
a step in which a global communication administration of the transmission link coordinates the assignment of transmission capacities.

3. Communication method according to Claim 2,
**characterized by**:
a step (SD2) in which the local communication administration (200) enquires at the global communication administration (100) which other local communication administrations are involved in the desired communication connection,
a step (SD3) in which the global communication administration (100) informs the enquiring local communication administration (200) about which other local communication administrations (300) are involved in the desired communication connection.

4. Communication method according to Claim 2,
**characterized by**:
a step in which the local communication administration (200) decides by means of own information which other local communication administrations (300) are involved in the connection.

5. Communication method according to one of Claims 2 to 4, **characterized by**:
a step (SD7) in which the local communication administration (200) informs the user of resources (800) of the negotiated transmission capacity.

6. Communication method for application in a communication system according to Claim 2, **characterized by**:
a step (SF6) in which, if the step of negotiating does not lead to a result, the global communication administration instructs the local communication administrations to assign a particular transmission capacity to the desired communication connection.

7. Communication method according to one of the preceding claims, **characterized in that**, in the case of an overbooking of the transmission link, the global communication administration (100) instructs the local communication administrations (200, 300, 400) to drop one or several existing connections.

8. Communication method according to one of the preceding claims, **characterized in that** the request with respect to the desired communication connection also comprises parameters with respect to the quality of the desired communication connection.

9. Communication method according to Claim 8, **characterized in that** the parameters with respect to the quality of the desired communication connection comprise data rate, latency time and/or jitter.

10. Communication method according to one of Claims 8 or 9, **characterized by**:
a step of calculating the quality parameters which can be provided on the transmission link for the communication connection to be set up,
a step in which the global communication administration (100) reports these quality parameters to the user of resources (800).

11. Communication method according to Claim 10, **characterized by**:
if the reported quality parameters do not match the requested quality parameters, a step in which the user of resources (800) informs the global or local communication administration (100, 200, 300, 400) whether the request for connection is maintained, possibly with altered quality parameters.

12. Communication method according to one of the preceding claims, **characterized in that** the sections (500, 600, 700) comprise at least two sections which are operated with different transmission standards.

## Revendications

1. Procédé de communication destiné à être utilisé dans un système de communication, **caractérisé par** :
une étape (SC1) dans laquelle un utilisateur de ressources (800) adresse une demande concernant une liaison de communication souhaitée à un gestionnaire de communication global (100) pour une section de transmission,
une étape (SC2) dans laquelle le gestionnaire de communication global (100) informe de la demande de liaison les gestionnaires de communication locaux (200, 300) participant à la liaison de communication souhaitée, lesquels allouent respectivement une capacité de transmission aux sections partielles de la section de transmission qui leur sont allouées,
une étape (SC4) dans laquelle ces gestionnaires de communication locaux (200, 300) négocient entre eux une capacité de transmission possible,
une étape (SC5) dans laquelle les gestionnaires de communication locaux (200, 300) déclarent la capacité de transmission négociée au gestionnaire de communication global (100) et
une étape dans laquelle le gestionnaire de communication global coordonne l'allocation des capacités de transmission.

2. Procédé de communication destiné à être utilisé dans un système de communication, **caractérisé par** :
une étape (SD1, SE1, SF1) dans laquelle un utilisateur de ressources (800) adresse une demande concernant une liaison de communication souhaitée à un gestionnaire de communication local (200), lequel alloue une capacité de transmission à l'une des sections partielles d'une section de transmission qui lui sont affectées,
une étape (SD6, SE4, SF4) dans laquelle le gestionnaire de communication local (200) négocie avec d'autres gestionnaires de communication locaux (300) participant à la liaison de communication souhaitée, lesquels allouent eux aussi respectivement une capacité de transmission aux sections partielles de la section de transmission qui leur sont allouées, et
une étape dans laquelle un gestionnaire de communication global de la section de transmission coordonne l'allocation des capacités de transmission.

3. Procédé de communication selon la revendication 2, **caractérisé par** :
une étape (SD2) dans laquelle le gestionnaire de communication local (200) demande au gestionnaire de communication global (100) quels autres gestionnaires de communication locaux participent à la liaison de communication souhaitée,
une étape (SD3) dans laquelle le gestionnaire de communication global (100) communique au gestionnaire de communication local (200) les autres gestionnaires de communication locaux (300) qui participent à la liaison de communication souhaitée.

4. Procédé de communication selon la revendication 2, **caractérisé par** :
une étape, dans laquelle le gestionnaire de communication local (200) décide au moyen de ses propres informations quels autres gestionnaires de communication locaux (300) participent à la liaison.

5. Procédé de communication selon l'une des revendications 2 à 4, **caractérisé par** :
une étape (SD7) dans laquelle le gestionnaire de communication local (200) communique la capacité de transmission négociée à l'utilisateur de ressources (800) .

6. Procédé de communication destiné à être utilisé dans un système de communication selon la revendication 2, **caractérisé par** :
une étape (SF6) dans laquelle, si l'étape de négociation ne produit aucun résultat, le gestionnaire de communication global commande aux gestionnaires de communication locaux d'allouer une capacité de transmission donnée à la liaison de communication souhaitée.

7. Procédé de communication selon l'une des revendications précédentes, **caractérisé en ce qu'**en cas d'interruption de la section de transmission, le gestionnaire de communication global (100) commande aux gestionnaires de communication locaux (200, 300, 400) d'abandonner une ou plusieurs liaisons en cours.

8. Procédé de communication selon l'une des revendications précédentes, **caractérisé en ce que** la demande concernant la liaison de communication souhaitée comprend en plus des paramètres concernant la qualité de la liaison de communication souhaitée.

9. Procédé de communication selon la revendication 8, **caractérisé en ce que** les paramètres concernant la qualité de la liaison de communication souhaitée comprennent le débit, le temps de latence et/ou la gigue.

10. Procédé de communication selon l'une des revendications 8 ou 9, **caractérisé par** :
une étape de calcul des paramètres de qualité qui doivent pouvoir être fournis pour la liaison de communication à établir sur la section de transmission,
une étape dans laquelle le gestionnaire de communication global (100) annonce ces paramètres de qualité à l'utilisateur de ressources (800).

11. Procédé de communication selon la revendication 10, **caractérisé par** l'étape suivante :
si les paramètres de qualité annoncés ne coïncident pas avec les paramètres de qualité exigés, on procède à une étape dans laquelle l'utilisateur de ressources (800) indique au gestionnaire de communication global ou local (100, 200, 300, 400) si la liaison doit être maintenue, éventuellement avec des paramètres de qualité modifiés.

12. Procédé de communication selon l'une des revendications précédentes, **caractérisé en ce que** les sections partielles (500, 600, 700) comprennent au moins deux sections partielles qui fonctionnent à des normes de transmission différentes.
